Europäisches Patentamt

(19) European Patent Office

Office européen des brevets

(11) Veröffentlichungsnummer: **0 008 069**
**A1**

(12) **EUROPÄISCHE PATENTANMELDUNG**

(21) Anmeldenummer: 79102747.7

(22) Anmeldetag: 01.08.79

(51) Int. Cl.³: **H 01 G 5/24**

(30) Priorität: 05.08.78 DE 2834472

(43) Veröffentlichungstag der Anmeldung: 20.02.80
Patentblatt 80/4

(84) Benannte Vertragsstaaten: AT BE CH FR GB IT LU NL
SE

(71) Anmelder: **Kurt Wolf & Co. KG, Langwiesenweg 67/73,
D-7547 Wildbad (DE)**

(72) Erfinder: **Wolf, Kurt, Langwiesenweg 71, D-7547
Wildbad (DE)**

(74) Vertreter: **Vogel, Georg, Auenweg 14, D-7141
Schwieberdingen (DE)**

(54) **Abstimmbarer Mehrfachkondensator für kleine Kapazitätswerte.**

(57) Ein abstimmbarer Kondensator mit feststehenden und beweglichen Kondensatorplatten wird nach der Erfindung so aufgebaut, daß er eine vernachläßigbare Anfangskapazität und dennoch einen großen Einstellbereich für eine kleine Endkapazität aufweist. Die feststehenden Kondensatorplatten bestehen aus zwei gegeneinander elektrisch isolierten Metallbelägen (17, 18) auf einer Leiterplatte (10). Die beweglichen Kondensatorplatten bestehen aus zwei halbkreisförmigen, elektrisch gegeneinander isolierten weiteren Metallbelägen (53, 54) auf einer Isolierscheibe (50). Die Isolierscheibe (50) ist über den feststehenden Metallbelägen (17, 18) der Leiterplatte (10) angeordnet und in einer Halterung (60) drehbar gelagert.

A 3705                              25.0008069

Firma
Kurt Wolf & Co. KG
Langwiesenweg 67/73
7547  W i l d b a d

- 1 -

## Abstimmbarer Mehrfachkondensator für kleine Kapazitätswerte

Die Erfindung betrifft einen abstimmbaren Mehrfachkondensator für kleine Kapazitätswerte, bei dem die Einzelkondensatoren mit einem Anschluß elektrisch leitend miteinander verbunden sind und bei dem die Einzelkondensatoren von feststehenden und drehbaren, im Abstand parallel zueinander angeordneten Kondensatorplatten gebildet sind.

In der UHF-Technik werden mehr und mehr Filter, insbesondere Bandpässe benötigt, deren Eckfrequenzen mit großer Genauigkeit eingehalten werden müssen, da für benachbarte Störer schon hohe Anforderungen an die Sperrdämpfung gestellt werden. Dies führt zum Einsatz von abstimmbaren Kreisen in den Filtern. Dabei kommt aber erschwerend hinzu, daß auch das L/C-Verhältnis der Kreise eingehalten werden muß, um die geforderte Charakteristik und den erforderlichen Scheinwiderstand zu erreichen.

An sich ließen sich diese Forderungen am besten mit festen L-Werten und festen C-Werten realisieren. Diese Werte mußten jedoch mit kleiner Toleranz erreicht werden. Dies bereitet bei den L-Werten keine Schwierigkeiten, die C-Werte, die sich lediglich in der Größenordnung von wenigen pF bewegen, stehen aber nicht mit der geforderten kleinen Toleranz zur Verfügung, so daß ein Abgleichverfahren angewendet werden muß.

Der Abgleich der L-Werte ließe sich verhältnismäßig leicht durchführen. Da die C-Werte aber größere Toleranzen aufweisen, weicht das L/C-Verhältnis des abgestimmten Kreises zu sehr vom errechneten und für die Einhaltung der Forderungen an das Filter bestimmten Wert ab. Aus diesem Grunde kann der L-Abgleich bei derartigen Filtern nicht verwendet werden.

Es bleibt daher nur der C-Abgleich, wobei als Einzelkondensatoren nur Trimmer oder abstimmbare Röhrchenkondensatoren in Frage kommen. Bei einem Mehrfachkondensator mit z.B. drei abstimmbaren Einzelkondensatoren, wie sie für einen Bandpaß erforderlich sind, bedeutet dies einen erheblichen Teileaufwand und einen entsprechend großen Verdrahtungsaufwand. Der Einsatz eines nach Art eines Drehkondensators aufgebauten Mehrfachkondensatores scheidet aus, da die Einzelkondensatoren ja unabhängig voneinander verändert werden können müssen.

Es ist Aufgabe der Erfindung, einen Mehrfachkondensator der eingangs erwähnten Art zu schaffen, der mit einfachen Teilen aufgebaut ist und mit wenig Verdrahtungsaufwand in ein Filter einbezogen werden kann. Dabei muß aber die individuelle Veränderbarkeit der Einzelkondensatoren des Mehrfachkondensators gewährleistet sein.

Dies wird erfindungsgemäß dadurch gelöst, daß für jeden Einzelkondensator eine Isolierscheibe mit zwei halbkreisförmigen, elektrisch gegeneinander isolierten, in gedruckter Schaltung aufgebrachten und mittels einer Isolierschicht abgedeckten Metallbelägen vorgesehen ist, daß die Isolierscheiben für alle Einzelkondensatoren in Aufnahmen einer gemeinsamen Kunststoff-Halterung drehbar gelagert sind, daß die Kunststoff-Halterung unverdrehbar mit einer Leiterplatte verbunden ist, wobei die Metallbeläge der Isolierscheiben der Leiterplatte zugekehrt und die Isolierscheiben unverlierbar in den Aufnahmen der Kunststoff-Halterung gehalten sind, daß jeder Isolierscheibe auf der Leiterplatte zwei mindestens gleich große und elektrisch gegeneinander isolierte Metallbeläge in gedruckter Schaltung zugeordnet sind, die in einer Winkelstellung der zugeordneten Isolierscheibe voll mit den Metallbelägen der Isolierscheibe zur Deckung kommen, und daß auf der Leiterplatte jeweils ein Metallbelag aller Einzelkondensatoren elektrisch leitend miteinander verbunden sind.

Der neue Mehrfachkondensator erfordert nur die Kunststoff-Halterung und pro Einzelkondensator eine Isolierscheibe. Diese Isolierscheiben lassen sich dadurch billig herstellen, daß die Isolierscheiben aus einer Isolierplatte mit zwei im Abstand zueinander angeordneten Leiterbahnen, die mittels einer Isolierfolie oder dgl. abgedeckt ist, ausgestanzt sind. Die Leiterplatte ist sowieso erforderlich, da auf ihr die übrigen Bauteile des Filters nämlich die Induktivitäten festgelegt werden. Die feststehenden Kondensatorplatten der Einzelkondensatoren werden durch die auf der Leiterplatte aufgebrachten Metallbeläge gebildet und fallen daher vom Aufwand her nicht ins Gewicht, da diese Metallbeläge zusammen mit den übrigen Schaltungsplatten und Leiterbahnen der Leiterplatte im gleichen Arbeitsgang erhalten werden.

A 3705 — 4 — 0008069

Jeder Einzelkondensator wird bei dieser Ausgestaltung von zwei parallelgeschalteten Reihenschaltungen aus zwei Kondensatoren gebildet, so daß der maximale Kapazitätswert nur etwa einem Viertel des Kapazitätswertes eines etwa gleich grossen Trimmers entspricht. Selbst bei kleinsten Kapazitätswerten ergeben sich daher noch ausreichend große Abmessungen für die Bauteile des neuen Mehrfachkondensators, die noch mit einfachen Mitteln zu montieren sind.

Die unverdrehbare Festlegung der Kunststoff-Halterung an der Leiterplatte ist nach einer Ausgestaltung so gelöst, daß die Kunststoff-Halterung an der der Leiterplatte zugekehrten Seite mit mindestens zwei Fixieransätzen versehen ist, die in Bohrungender Leiterplatte eingreifen, und daß die Kunststoff-Halterung mittels einer Schraube an der Leiterplatte gehalten ist, die in eine Gewindebohrung der Kunststoff-Halterung einschraubbar ist und sich mit dem Schraubenkopf an der Leiterplatte abstützt.

Damit dabei die Isolierscheiben mit ihren Metallbelägen gegen die auf der Leiterplatte aufgebrachten Metallbeläge gedrückt werden, sieht eine Weiterbildung vor, daß die Isolierscheiben in erweiterten, der Leiterplatte zugekehrten Absätzen von Bohrungen der Kunststoff-Halterung eingesetzt sind, und daß die Isolierscheiben geringfügig aus diesen Absätzen der Kunststoff-Halterung vorstehen. Mit dem Festziehen der Schraube nach der Abstimmung der Einzelkondensatoren werden die Isolierscheiben in ihren eingestellten Winkelstellungen unverdrehbar festgelegt.

Die Verdrehung der Isolierscheiben in den Aufnahmen der Kunststoff-Halterung wird dadurch erleichtert, daß die Isolierschei-

A 3705 - 5 - 0008069

ben vorzugsweise in dem Trennbereich zwischen den beiden Metallbelägen mit Aufnahmen, Durchbrüchen oder dgl. für den Ansatz eines Abgleichwerkzeuges versehen sind.

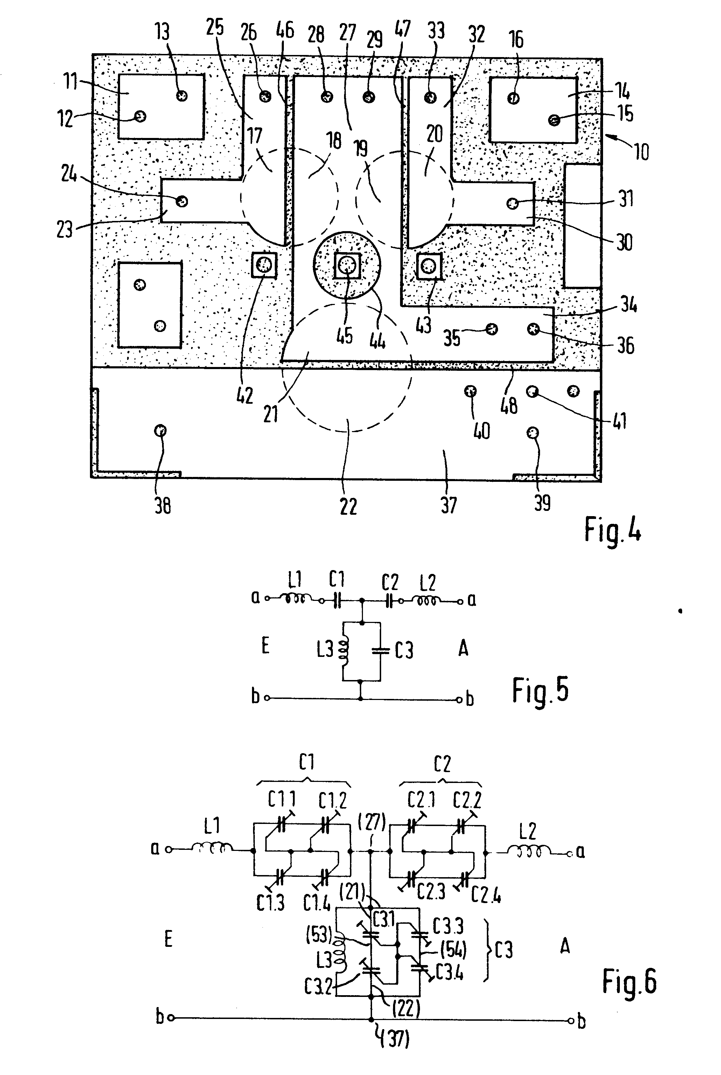

Für den Aufbau eines einfachen Bandpasses (Fig. 5) wird ein Dreifachkondensator benötigt. Der Aufbau des Mehrfachkondensators wird dann so gewählt, daß die drei Einzelkondensatoren eines einfachen Bandpasses die drei Aufnahmen in der Kunststoff-Halterung für die Isolierscheiben in Dreieckform angeordnet sind und daß die Schraube im Zentrum dieses Dreiecks angeordnet ist. Auf diese Weise wird mittels einer einzigen Schraube eine eindeutige Dreipunktabstützung der drei Isolierscheiben auf der Leiterplatte erreicht.

Da der Querparallelschwingkreis des Bandpasses einen größeren Kapazitätswert erfordert, ist nach einer weiteren Ausgestaltung vorgesehen, daß eine Isolierscheibe im Durchmesser größer ist.

Damit die Isolierscheiben in der Kunststoff-Halterung geschützt untergebracht sind, ist die weitere Ausgestaltung so, daß die der Leiterplatte abgekehrte Oberseite der Kunststoff-Halterung mit einem umlaufenden Schutzrand versehen ist.

Die Vielfachschaltung der Einzelkondensatoren erfolgt auf der Leiterplatte ohne zusätzliche Lötstellen dadurch, daß jeweils ein Metallbelag aller Einzelkondensatoren auf der Leiterplatte zu einer rechteckförmigen Belagplatte zusammengefaßt sind und daß die übrigen Metallbeläge dieser Einzelkondensatoren durch Trennbereiche getrennt an drei Seiten dieser Belagplatte anschließen.

Damit die Schraubbefestigung für die Kunststoff-Halterung die Einzelkondensatoren nicht beeinträchtigt, ist vorgesehen, daß in der Belagplatte ein Kreis für die Bohrung zur Aufnahme der Schraube ausgespart ist, wobei die Bohrung von einem Belagring umgeben ist.

Eine Weiterbildung des erfindungsgemäßen Mehrfachkondensators ist dadurch gekennzeichnet, daß die Metallbeläge auf der Leiterplatte mit Anschlußfahnen und/oder Lötlöchern versehen sind, wobei die Anschlußfahnen in gedruckter Schaltung aufgebracht sind. Auf diese Weise wird die Verbindung der so gebildeten Einzelkondensatoren mit den L-Bauteilen des Filters erleichtert. Den Einzelkondensatoren lassen sich auch Festkondensatoren mit einem kleineren Kapazitätswert parallelschalten, so daß mit den abstimmbaren Einzelkondensatoren nur der Differenzwert zum Sollwert realisiert werden muß.

Bei der Ausbildung des Mehrfachkondensators für ein Bandpaß-Filter ist zudem vorgesehen, daß auf der Leiterplatte der freie Metallbelag des größeren Einzelkondensators als Masseplatte ausgebildet ist.

Für den weiteren Aufbau des Filters ist vorgesehen, daß die Leiterplatte zusätzlich mit von den Metallbelägen der Einzelkondensatoren elektrisch isolierten Schaltungsplatten in gedruckter Schaltung versehen ist, die mit Lötlöchern durchbrochen sind. Auf diese Weise werden alle zusätzlichen Bauelemente des Filters auf der Leiterplatte verdrahtet und Anschlüsse für den Eingang und den Ausgang des Filters geschaffen.

Die Erfindung wird anhand eines in den Zeichnungen dargestellten Ausführungsbeispiels eines Dreifachkondensators
für ein einfaches Bandpaß-Filter näher erläutert. Es zeigen:

Fig. 1     den Aufbau eines Mehrfachkondensators nach der Erfindung, wobei
der Bereich eines Einzelkondensators im Schnitt dargestellt ist,

Fig. 2     die Ansicht auf die der Leiterplatte abgekehrte Oberseite der Kunststoff-Halterung mit drei Aufnahmen
für Isolierscheiben,

Fig. 3     die Ansicht auf die der Leiterplatte zugekehrte Unterseite der Kunststoff-Halterung mit einer eingesetzten Isolierscheibe,

Fig. 4     die Draufsicht auf die Leiterplatte
mit den Metallbelägen und Schaltungsplatten,

Fig. 5     den Stromlaufplan eines einfachen
Bandpaß-Filters und

Fig. 6     den Ersatzstromlaufplan des Bandpaß-
Filters mit dem erfindungsgemäßen
Dreifachkondensator.

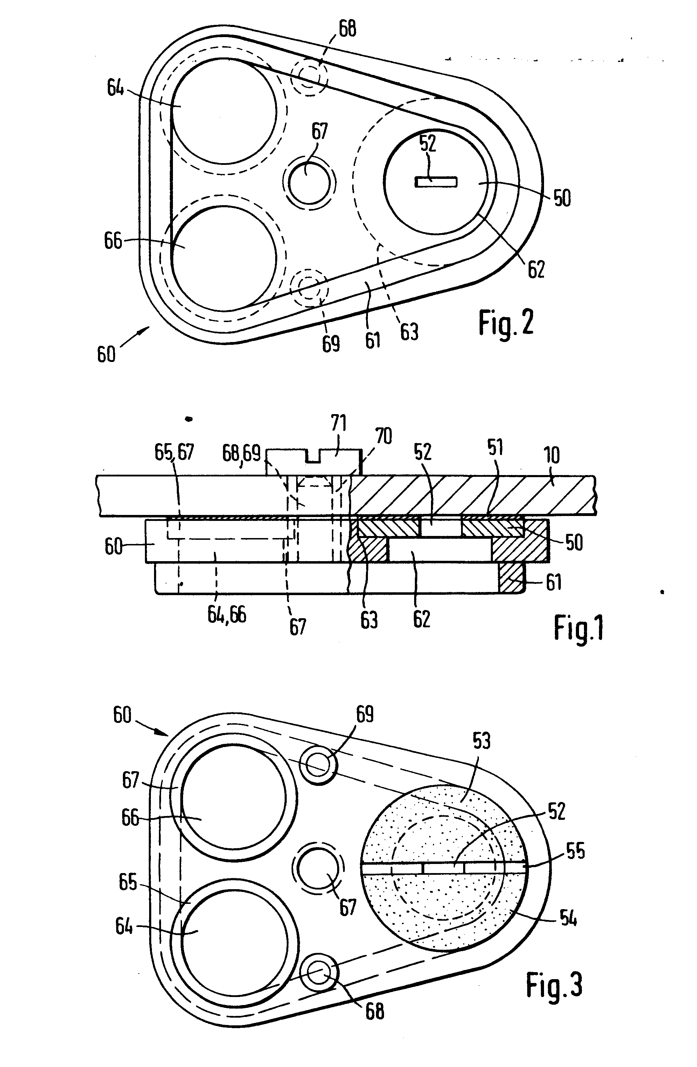

Das in den Fig. 1 bis 6 erläuterte Ausführungsbeispiel ist ein Dreifachkondensator für einen einfachen Bandpaß, wie er in Fig. 5 im Stromlaufplan dargestellt ist. In der Ader a sind vom Eingang E zum Ausgang A zwei Serienschwingkreise eingeschleift, die durch die Induktivität der Spulen L1 und L2, sowie die Kapazitäten der Kondensatoren C1 und C2 gebildet werden. Der Verbindungspunkt der beiden Serienschwingkreise zwischen den Kondensatoren C1 und C2 führt über einen Parallelschwingkreis aus der Induktivität der Spule L3 und der Kapazität des Kondensators C3 zur durchgehenden Ader b. Wie eingangs erwähnt, müssen die Kondensatoren abstimmbar sein. Voraussetzung für den erfindungsgemäßen Aufbau dieses Dreifachkondensators ist, daß alle drei Kondensatoren C1 bis C3 einen Anschluß gemeinsam haben. Dies ist, wie der Stromlaufplan nach Fig. 5 zeigt, der Fall.

Anhand der Fig. 1 bis 4 wird nun der Aufbau des Dreifachkondensators erläutert. In einer Kunststoff-Halterung 60 sind drei in Dreieckform eingebrachte Bohrungen 62, 64 und 66 vorgesehen. Dabei ist der Durchmesser der Bohrung 62 größer als der Durchmesser der gleich großen Bohrungen 64 und 66. Dies rührt daher, da die Kondensatoren C1 und C2 gleiche Kapazitätswerte aufweisen, der Kondensator C3 aber einen größeren Kapazitätswert haben muß, wie sich aus den Berechnungsvorschriften für einen derartigen Bandpaß ergibt.

Die Bohrungen 62, 64 und 66 in der Kunststoff-Halterung 60 sind auf der der Leiterplatte 10 zugekehrten Seite als im Durchmesser erweiterte Absätze 63, 65 und 67 ausgebildet und nehmen entsprechend bemessene Isolierscheiben 50 auf.

Diese Isolierscheiben 50 tragen auf der der Leiterplatte 10 zugekehrten Seite zwei halbkreisförmige Metallbeläge 53 und 54, die durch den schmalen, streifenförmigen Trennbereich 52 elektrisch voneinander getrennt sind. Die Metallbeläge 53 und 54 sind in gedruckter Schaltung aufgebracht und mittels einer Isolierfolie 51 abgedeckt. Diese Isolierscheiben 50 werden vorzugsweise aus einer Isolierplatte mit zwei im Abstand zueinander verlaufenden Leiterbahnen ausgestanzt, wobei die Isolierplatte mit den Leiterbahnen vorher mittels der Isolierfolie abgedeckt wurde. In dem Trennbereich 52 der Isolierscheibe 50 ist ein schlitzförmiger Durchbruch 52 eingebracht, in den ein Abgleichwerkzeug zum Verdrehen der Isolierscheibe 50 in der Aufnahme der Kunststoff-Halterung 60 eingeführt werden kann.

Sind in alle drei Absätze 63, 65 und 67 entsprechend bemessene Isolierscheiben 50 eingesetzt, so daß deren Metallbeläge 53 und 54 freiliegen und die Isolierscheiben 50 geringfügig aus diesen Aufnahmen vorstehen, dann wird die Kunststoff-Halterung 60 mit der Leiterplatte 10 nach Fig. 4 verbunden. Dabei werden die Fixieransätze 68 und 69 in die Bohrungen 42 und 43 der Leiterplatte 10 eingeführt, die mittels eines Metallringes in gedruckter Schaltung umgeben sind. Damit kann die Kunststoff-Halterung 60 unverdrehbar mit der Leiterplatte 10 verbunden werden. Die Schraube 70 wird durch die Bohrung 45 der Leiterplatte 10 geführt und in die Gewindebohrung 67 der Kunststoff-Halterung 60 eingeschraubt, aber noch nicht festgezogen. Die Isolierscheiben 50 sind dann unverlierbar in den Aufnahmen der Kunststoff-Halterung 60 gehalten, sie können jedoch in diesen Aufnahmen noch verdreht werden. Das Abgleichwerkzeug wird dabei über die Bohrungen 62, 64 und 66 in die Durchbrüche 52 der Isolierscheiben 50 eingeführt.

Die Leiterplatte 10 weist unterhalb der Isolierscheiben 50 ebenfalls zwei in gedruckter Schaltung aufgebrachte Metallbeläge 17 und 18 bzw. 19 und 20 bzw. 21 und 22 auf. Diese Paare von Metallbelägen sind jeweils durch einen Trennbereich 46 bzw. 47 bzw. 48 elektrisch voneinander getrennt, wie die dunklen Bereiche (weggeätzten Bereiche) der Leiterplatte 10 zeigen. Diese Metallbeläge sind mindestens so groß wie die Metallbeläge 53 und 54 der zugeordneten Isolierscheibe 50, so daß in einer bestimmten Winkelstellung der Isolierscheibe den Metallbelägen 53 und 54 derselben gleich große Metallbeläge der Leiterplatte 10 deckungsgleich gegenüberliegen. Der Kapazitätswert nimmt das Minimum an und ist im wesentlichen durch die beiden Streukapazitäten zwischen den beiden Metallbelägen, z.B. 21 und 22, der Leiterplatte 10 und den beiden Metallbelägen 53 und 54 der zugeordneten Isolierscheibe 50 gegeben, die über die Kapazitäten zwischen den Metallbelägen 21 und 53 einerseits und zwischen den Metallbelägen 22 und 54 andererseits parallelgeschaltet sind. Wird die Isolierscheibe 50 verdreht, so daß die Trennbereiche 48 und 55 in einem Winkel von 90° stehen, dann hat der so aufgebaute und abstimmbare Kondensator seinen maximalen Kapazitätswert.

Wie die Ersatzschaltung nach Fig. 6 zeigt, stellt jeder abstimmbare Kondensator C1 bis C3 vier Teilkondensatoren C1.1 bis C1.4 bzw. C2.1 bis C2.4 bzw. C3.1 bis C3.4 dar, von denen jeweils zwei in Reihe geschaltet und beide Reihenschaltungen jeweils parallelgeschaltet sind. Zu Beginn der Verdrehung der Isolierscheibe 50 ist z.B. der Kapazitätswert des Kondensators C3.1 praktisch Null. Dasselbe gilt für den Kapazitätswert des Kondensators C3.4. Die Kapazitätswerte für die Kondensatoren C3.2 und C3.4 sind dabei durch die einander gegenüberliegenden Metallbeläge 21 und 53 bzw. 22 und 54 gegeben. Diese Kapazitätswerte entsprechen etwa dem halben Kapazitätswert Co eines Trimmers mit der gesamten Kreisfläche, die durch die Metallbeläge 21 und 22 bzw. 53 und 54 belegt ist. In der Endstellung, in der die Trennbereiche 48 und 55 im rechten Winkel zueinander stehen, haben alle Kondensatoren C3.1 bis C3.4 den gleichen Kapazitätswert Co/4, da sich jeweils nur die halben Metallbelägt gegenüberliegen. Dabei übernehmen die Metallbeläge 53 und 54 der Isolierscheibe 50 die Verbindung der Kondensatoren C3.1 und C3.2 bzw. C3.3 und C3.4, wie in Fig. 6 gezeigt ist. Die Metallbeläge 21 und 22 dienen gleichzeitig zur Verbindung des Kondensators C3 mit der Ader b des Bandpasses und zur Vielfachschaltung der Kondensatoren C1 bis C3. Auch die Kondensatoren C1 und C2 sind in gleicher Weise aufgebaut und stellen jeweils vier Kondensatoren C1.1 bis C1.4 bzw. C2.1 bis C2.4 dar, die gemeinsam verändert werden, wenn die zugeordnete Isolierscheibe mit den beiden Metallbelägen verdreht wird. Da die beiden Reihenschaltungen C1.1 und C1.2 bzw. C1.3 und C1.4 oder C2.1 und C2.2 bzw. C2.3 und C2.4 oder C3.1 und C3.2 bzw. C3.3 und C3.4 jeweils parallelgeschaltet sind, ergibt sich ein maximaler Kapazitätswert von Co/4 eines gleich großen Trimmers.

Wie die Fig. 4 zeigt, sind die drei Metallbeläge 17, 19 und 21 der drei Kondensatoren C1 bis C3 zu einer rechteckförmigen Metallplatte 27 vereingt, so daß darüber alle drei Kondensatoren C1 bis C3 ohne weitere Lötstellen einseitig miteinander verbunden sind, so wie es der Stromlaufplan vorschreibt. Die übrigen Metallbeläge 18, 20 und 22 dieser Kondensatoren C1 bis C3 sind an drei Seiten dieser Metallplatte 27 durch die Trennbereiche 46, 47 und 48 elektrisch davon isoliert angeordnet. Die Metallbeläge 17 und 20 sind mit in gedruckter Schaltung ausgeführten Anschlußfahnen 23, 25, 30 und 32 versehen, die mit Lötlöchern 24, 26, 31 und 33 versehen sind. Die Metallplatte 27 ist selbst mit Lötlöchern 28 und 29 versehen und weist eine Anschlußfahne 34 mit den Lötlöchern 35 und 36 auf. Der Metallbelag 22 ist als Masseplatte 37 mit den Lötlöchern 38 bis 41 ausgebildet.

Außerdem sind auf der Leiterplatte 10 die beiden Schaltungsplatten 11 und 14 in gedruckter Schaltung aufgebracht, die mit Lötlöchern 12 und 13 bzw. 15 und 16 versehen sind.

Die Lötlöcher 12 und 15 bilden den Eingang und den Ausgang der Ader a des Bandpasses. Die Spule mit der Induktivität L1 ist in den Lötlöchern 13 und 24 verlötet, während die Spule mit der Induktivität L2 in den Lötlöchern 16 und 31 verlötet ist. Die Spule mit der Induktivität L3 kann in den Lötlöchern 35 und 40 angeschaltet werden. Die Lötlöcher 38 und 39 in der Masseplatte 37 bilden den Eingang und den Ausgang der Ader b des Bandpasses.

Zwischen die Lötlöcher 26 und 28 bzw. 29 und 33 bzw. 36 und 41 können jeweils Festkondensatoren angeschaltet werden, die dann den abstimmbaren Kondensatoren C1 bis C3 parallelgeschaltet sind.

Sind die Schwingkreise des Bandpasses durch Verdrehen der den Einzelkondensatoren C1 bis C3 zugeordneten Isolierscheiben 50 abgeglichen, dann wird die Schraube 70 festgezogen,

A 3705 — 13 — 0008069

wobei sich der Schraubenkopf 71 an der Leiterplatte 10 abstützt und die aus den Aufnahmen der Kunststoff-Halterungen 60 vorstehenden Isolierscheiben 50 verspannt und unverdrehbar festlegt.

Der erfindungsgemäße Mehrfachkondensator ist einfach im Aufbau und läßt sich leicht montieren und abgleichen. Der Bandpaß kann daher exakt abgestimmt werden, wobei auch die geforderten L/C-Verhältnisse der Schwingkreise eingehalten werden.

A 3705 - 1 - 0008069

Ansprüche:

1. Abstimmbarer Mehrfachkondensator für kleine Kapazitätswerte, bei dem die Einzelkondensatoren mit einem Anschluß elektrisch leitend miteinander verbunden sind und bei dem die Einzelkondensatoren von feststehenden und drehbaren, im Abstand parallel zueinander angeordneten Kondensatorenplatten gebildet sind, dadurch gekennzeichnet,

daß für jeden Einzelkondensator (C1, C2, C3) eine Isolierscheibe (50) mit zwei halbkreisförmigen, elektrisch gegeneinander isolierten, in gedruckter Schaltung aufgebrachten und mittels einer Isolierschicht (51) abgedeckten Metallbelägen (53,54) vorgesehen ist,

daß die Isolierscheiben (50) für alle Einzelkondensatoren (C1, C2, C3) in Aufnahmen einer gemeinsamen Kunststoff-Halterung (60) drehbar gelagert sind, daß die Kunststoff-Halterung (60) unverdrehbar mit einer Leiterplatte (10) verbunden ist, wobei die Metallbeläge (53,54) der Isolierscheiben (50) der Leiterplatte (10) zugekehrt und die Isolierscheiben (50)' unverlierbar in den Aufnahmen der Kunststoff-Halterung (60) gehalten sind,

daß jeder Isolierscheibe (50) auf der Leiterplatte (10) zwei mindestens gleich große und elektrisch gegeneinander isolierte Metallbeläge (z.B. 21,22) in gedruckter Schaltung zugeordnet sind, die in einer Winkelstellung der zugeordneten Isolierscheibe (50) voll mit den Metallbelägen (53,54) der Isolierscheibe (50) zur Deckung kommen,

und daß auf der Leiterplatte (10) jeweils ein Metallbelag (z.B. 18,19,21) aller Einzelkondensatoren (C1, C2, C3) elektrisch leitend miteinander verbunden sind.

A 3705 — 2 — 0008069

2. Mehrfachkondensator nach Anspruch 1,
dadurch gekennzeichnet,
daß die Isolierscheiben (50) aus einer Isolierplatte
mit zwei im Abstand zueinander angeordneten Leiterbahnen, die mittels einer Isolierfolie oder dgl. abgedeckt sind, ausgestanzt sind.

3. Mehrfachkondensator nach Anspruch 1 und 2,
dadurch gekennzeichnet,
daß die Kunststoff-Halterung (60) an der der Leiterplatte (10) zugekehrten Seite mit mindestens zwei
Fixieransätzen (68,69) versehen ist, die in Bohrungen (42,43) der Leiterplatte (10) eingreifen,
und daß die Kunststoff-Halterung (60) mittels einer
Schraube (70) an der Leiterplatte (10) gehalten ist,
die in eine Gewindebohrung (67) der Kunststoff-Halterung (60) einschraubbar ist und sich mit dem
Schraubenkopf (71) an der Leiterplatte (10) abstützt.

4. Mehrfachkondensator nach einem der Ansprüche 1 bis 3,
dadurch gekennzeichnet,
daß die Isolierscheiben (50) in erweiterten, der
Leiterplatte (10) zugekehrten Absätzen (63,65,67)
von Bohrungen (62,64,66) der Kunststoff-Halterung
(60) eingesetzt sind,
und daß die Isolierscheiben (50) geringfügig aus
diesen Absätzen (63, 65,67) der Kunststoff-Halterung (60) vorstehen.

5. Mehrfachkondensator nach einem der Ansprüche 1 bis 4,
dadurch gekennzeichnet,

daß die Isolierscheiben (50) vorzugsweise in dem Trennbereich (55) zwischen den beiden Metallbelägen (53,54) mit Aufnahmen, Durchbrüchen (52) oder dgl. für den Ansatz eines Abgleichwerkzeuges versehen sind.

6. Mehrfachkondensator nach einem der Ansprüche 1 bis 5, dadurch gekennzeichnet, daß die drei Einzelkondensatoren (C1, C2, C3) eines einfachen Bandpasses (Figur 5) die drei Aufnahmen in der Kunststoff-Halterung (60) für die Isolierscheiben (50) in Dreieckform angeordnet sind, und daß die Schraube (70) im Zentrum dieses Dreiecks angeordnet ist.

7. Mehrfachkondensator nach Anspruch 6, dadurch gekennzeichnet, daß eine Isolierscheibe (50) im Durchmesser größer ist.

8. Mehrfachkondensator nach einem der Ansprüche 1 bis 7, dadurch gekennzeichnet, daß die der Leiterplatte (10) abgekehrte Oberseite der Kunststoff-Halterung (60) mit einem umlaufenden Schutzrand (61) versehen ist.

9. Mehrfachkondensator nach einem der Ansprüche 1 bis 8, dadurch gekennzeichnet, daß jeweils ein Metallbelag (18,19,21) aller Einzelkondensatoren (C1, C2, C3) auf der Leiterplatte (10) zu einer rechteckförmigen Belagplatte (27) zusammengefaßt sind,

A 3705 — 4 — 0008069

und daß die übrigen Metallbeläge (17,20,22) dieser
Einzelkondensatoren (C1, C2, C3) durch Trennbereiche
(46,47,48) getrennt an drei Seiten dieser Belagplatte
(27) anschließen (Figur 4).

10. Mehrfachkondensator nach Anspruch 9,
dadurch gekennzeichnet,
daß in der Belagplatte (27) ein Kreis (44) für die
Bohrung (45) zur Aufnahme der Schraube (70) ausgespart ist, wobei die Bohrung (45) von einem Belagring umgeben ist.

11. Mehrfachkondensator nach Anspruch 9 und 10,
dadurch gekennzeichnet,
daß die Metallbeläge (17 bis 22) auf der Leiterplatte (10) mit Anschlußfahnen (23,25,30,32,34)
und/oder Lötlöchern (24,26,31,33,35,36,38 bis 41)
versehen sind, wobei die Anschlußfahnen in gedruckter Schaltung aufgebracht sind.

12. Mehrfachkondensator nach einem der Ansprüche 9 bis 11,
dadurch gekennzeichnet,
daß auf der Leiterplatte (10) der freie Metallbelag
(22) des größeren Einzelkondensators (C3) als Masseplatte (37) ausgebildet ist.

13. Mehrfachkondensator nach einem der Ansprüche 1 bis 12,
dadurch gekennzeichnet,
daß die Leiterplatte (10) zusätzlich mit von den Metallbelägen (17 bis 22) der Einzelkondensatoren (C1,
C2, C3) elektrisch isolierten Schaltungsplatten (11,
14) in gedruckter Schaltung versehen ist, die mit Lötlöchern (12,13,15,16) durchbrochen sind.

**Fig. 2**

**Fig. 1**

**Fig. 3**

Fig.4

Fig.5

Fig.6

| | Europäisches Patentamt | **EUROPÄISCHER RECHERCHENBERICHT** | **0008069** Nummer der Anmeldung EP 79 10 2747 |

| **EINSCHLÄGIGE DOKUMENTE** | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | US - A - 3 693 058 (TEKTRONIX INC.) * Ansprüche; Figuren 5,7 * -- | 1,2,9, 11 | H 01 G 5/24 |
| A | US - A - 3 953 771 (STETTNER & CO.) * Ansprüche; Figuren 1-14 * -- | 1,7 | |
| A | FR - A - 1 418 475 (STETTNER & CO.) * Ansprüche; Figuren 3-6 * & DE - A - 1 195 409 & DE - A - 1 189 649 -- | 1 | RECHERCHIERTE SACHGEBIETE (Int. Cl. 3) H 01 G 5/24 5/22 H 05 K 1/16 |
| A | US - A - 3 191 098 (LOCKHEED AIR- CRAFT CORP.) * Ansprüche; Figur 13 * ---- | 1,8,9 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-11-1979 | VAN REETH |

EPA form 1503.1  06.78